# EUROPEAN PATENT APPLICATION

(11) **EP 4 700 912 A1**
(43) Date of publication of application: **25.02.2026**
(21) Application number: 25184109.4
(22) Date of filing: 20.06.2025
(51) Int. Cl.: H01M 10/613, H01M 10/625, H01M 10/6556, H01M 50/242, H01M 50/249, H01M 50/293, H01M 50/342, H01M 50/358

(54) **POWER STORAGE DEVICE**

(30) Priority: 25.07.2024 JP 2024119290
(71) Applicant: TOYOTA JIDOSHA KABUSHIKI KAISHA, Toyota-shi, Aichi-ken 471-8571 (JP)
(72) Inventor: INOUE, Shigeyuki, Toyota-shi, 471-8571 (JP); SUGIE, Kazuki, Toyota-shi, 471-8571 (JP); KUMAZAWA, Kazuya, Toyota-shi, 471-8571 (JP)
(74) Representative: TBK

(57) **Abstract**

A power storage device includes: a power storage stack including a plurality of power storage cells (100) each having a lower surface (121) and an upper surface (123), a safety valve (SV) being disposed in the lower surface (121); a support portion that supports the power storage stack from below; an exhaust path (60) provided below the support portion and provided to be able to communicate with a space (S) located directly below the safety valve (SV); a cooler (200) that cools the power storage stack, the cooler (200) being disposed below the power storage stack; and a plate-shaped member disposed above the power storage stack and facing the upper surface (123) of each of the power storage cells (100).

## Description

### CROSS REFERENCE TO RELATED APPLICATIONS

This nonprovisional application is based on Japanese Patent Application No. 2024-119290 filed on July 25, 2024 with the Japan Patent Office, the entire contents of which are hereby incorporated by reference.

### BACKGROUND

### Field

The present disclosure relates to a power storage device.

### Description of the Background Art

For example, Japanese National Patent Publication No. 2022-525014 discloses a structure in which a power battery pack (a power storage device) including an accommodation case accommodating a plurality of cells (power storage cells) installed therein is fixed to a bottom of a battery electric vehicle.

### SUMMARY

In a power storage device, a power storage stack including a plurality of power storage cells disposed inside the accommodation case may be cooled from below, and such a power storage device may be fixed to a vehicle such that a top wall portion of the accommodation case serves as a floor panel.

In such a situation, there is a concern that, when any one of the plurality of power storage cells generates heat and expands, the upper surface side of each cell may expand to exert an influence on a vehicle interior. Further, without any countermeasures therefor, there is also a concern that the vehicle interior may be heated by the gas discharged from the power storage cell that has generated heat.

The present disclosure has been made in view of the above-described problems, and an object thereof is to provide a power storage device capable of suppressing upward expansion of a power storage cell while suppressing heat from being transferred to an area above the power storage cell by gas discharged from the power storage cell.

A power storage device according to the first aspect of the present disclosure includes: a power storage stack including a plurality of power storage cells each having a lower surface and an upper surface, a safety valve being disposed in the lower surface; a support portion that supports the power storage stack from below; an exhaust path provided below the support portion and provided to be able to communicate with a space located below the safety valve; a cooler that cools the power storage stack, the cooler being disposed below the power storage stack; and a plate-shaped member disposed above the power storage stack and facing the upper surface included in each of the plurality of power storage cells.

According to the above-described configuration, by providing the safety valve in the lower surface of the power storage cell and providing the exhaust path below the support portion that supports the power storage stack, the gas discharged from the power storage cell can be suppressed from moving through an area above the power storage stack. Thereby, transfer of heat to the area above the power storage cell by the gas discharged from the power storage cell can be suppressed. Further, the cooler disposed below the power storage device can cool the gas discharged from the power storage cell. In addition, the plate-shaped member disposed above the power storage stack can suppress upward expansion of the upper surface of each of the plurality of power storage cells.

In the power storage device according to the first aspect of the present disclosure, the plurality of power storage cells may be arranged in a first direction orthogonal to an upward-downward direction in which the upper surface and the lower surface are arranged. In each of the plurality of power storage cells, a direction orthogonal to the upward-downward direction and the first direction is defined as a width direction, and the plate-shaped member may be formed of a restraint band that restrains the power storage stack from both sides of the power storage stack in the first direction, the restraint band being disposed to extend in the first direction along at least a central portion, in the width direction, of the upper surface included in each of the plurality of power storage cells.

According to the above-described configuration, the restraint band can suppress upward expansion of the upper surface of each of the power storage cells.

The power storage device according to the first aspect of the present disclosure may further include a first outer restraint band and a second outer restraint band that restrain the power storage stack from both sides of the power storage stack in the first direction, the first outer restraint band and the second outer restraint band each including a portion disposed to extend in the first direction along a corresponding one of both end sides, in the width direction, of the upper surface included in each of the plurality of power storage cells. In this case, the restraint band may be disposed between the first outer restraint band and the second outer restraint band in the width direction.

According to the above-described configuration, the restraint band disposed between the first outer restraint band and the second outer restraint band in the width direction can effectively suppress upward expansion of the central portion of the upper surface in the width direction.

In the power storage device according to the first aspect of the present disclosure, the restraint band may cover the upper surface entirely in the width direction, the upper surface being included in each of the plurality of power storage cells.

According to the above-described configuration, upward expansion of the upper surface of each of the power storage cells can be entirely suppressed.

A power storage device according to the first aspect of the present disclosure includes: a power storage stack including a plurality of power storage cells each having a lower surface and an upper surface, a safety valve being disposed in the lower surface; a support portion that supports the power storage stack from below; an exhaust path provided below the support portion and provided to be able to communicate with a space located below the safety valve; a cooler that cools the power storage stack, the cooler being disposed below the power storage stack; an upper member that covers the power storage stack from above; and an adhesive disposed between the upper member and the upper surface of each of the plurality of power storage cells.

According to the above-described configuration, by providing the safety valve in the lower surface of the power storage cell and providing the exhaust path below the support portion that supports the power storage stack, the gas discharged from the power storage cell can be suppressed from moving through an area above the power storage stack. Thereby, transfer of heat to an area above the power storage cell by the gas discharged from the power storage cell can be suppressed. Further, the cooler disposed below the power storage device can cool the gas discharged from the power storage cell. In addition, the adhesive disposed between the upper member and the upper surface of each of the power storage cells can suppress upward expansion of the upper surface of each of the power storage cells. Further, the adhesive can suppress vibration of the upper member.

The power storage device according to the present disclosure may further include a lower case having a bottom wall portion located below the power storage stack. In this case, the support portion may be formed of a part of the bottom wall portion, and the cooler may be disposed below the bottom wall portion.

According to the above-described configuration, the exhaust path is provided below the bottom wall portion constituting the support portion. Thus, when the gas is discharged from the power storage cell, the gas can be discharged to the outside of (below) the lower case.

The power storage device according to the present disclosure may include: a lower case having a bottom wall portion located below the power storage stack; and a path forming member disposed between the bottom wall portion and the power storage stack to form the exhaust path together with the bottom wall portion. The cooler may be disposed between the power storage stack and the path forming member. The support portion may include the path forming member and the cooler.

According to the above-described configuration, the gas discharged downward from the safety valve of the power storage cell can be caused to flow into a space formed between the bottom wall portion of the lower case and the path forming member. Thereby, an upward flow of the discharged gas can be suppressed. Further, the cooler disposed on the path forming member can cool the gas flowing through the exhaust path.

The foregoing and other objects, features, aspects, and advantages of the present disclosure will become apparent from the following detailed description of the present disclosure when taken in conjunction with the accompanying drawings.

### BRIEF DESCRIPTION OF THE DRAWINGS

Fig. 1 is a diagram showing a vehicle including a power storage device according to a first embodiment.
Fig. 2 is a perspective view showing the power storage device and a frame member according to the first embodiment.
Fig. 3 is a cross-sectional view taken along a line III-III shown in Fig. 2.
Fig. 4 is a cross-sectional view taken along a line IV-IV shown in Fig. 3.
Fig. 5 is a plan view showing a cooler according to the first embodiment.
Fig. 6 is a cross-sectional view taken along a line VI-VI shown in Fig. 5.
Fig. 7 is a cross-sectional view showing a power storage device according to a second embodiment.
Fig. 8 is a cross-sectional view showing a power storage device according to a third embodiment.
Fig. 9 is a cross-sectional view showing a power storage device according to a fourth embodiment.

### DESCRIPTION OF THE PREFERRED EMBODIMENTS

Hereinafter, embodiments of the present disclosure will be described in detail with reference to the accompanying drawings. In the embodiments described below, the same or common parts are denoted by the same reference characters in the drawings, and the description thereof will not be repeated.

### (First Embodiment)

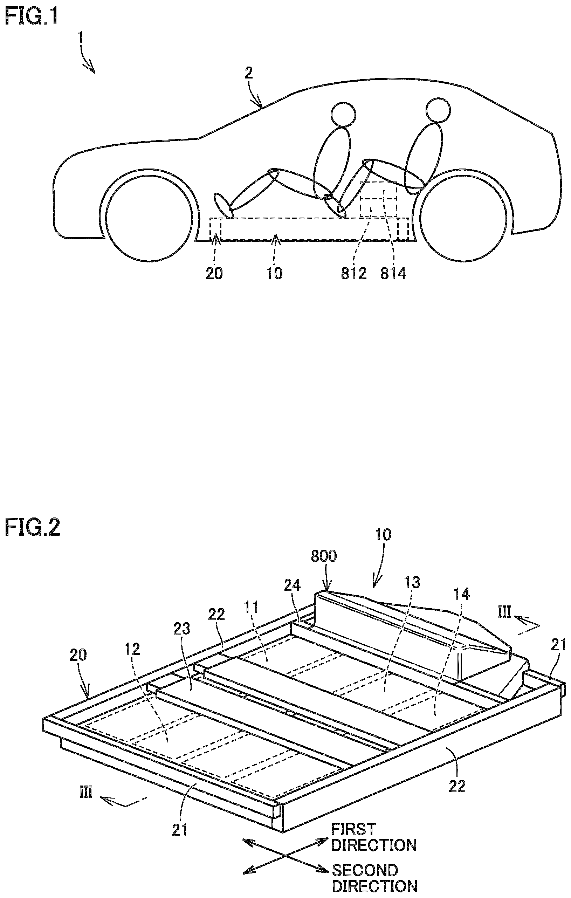

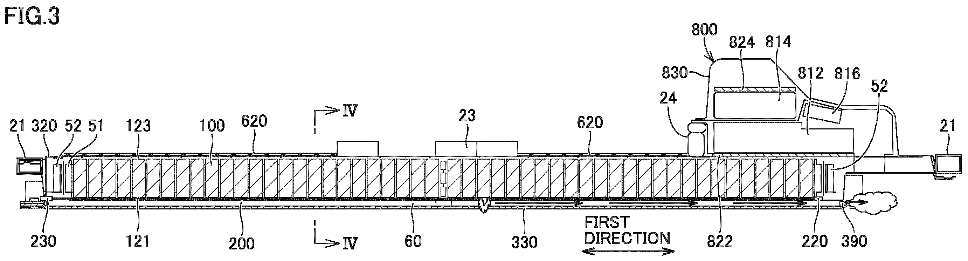

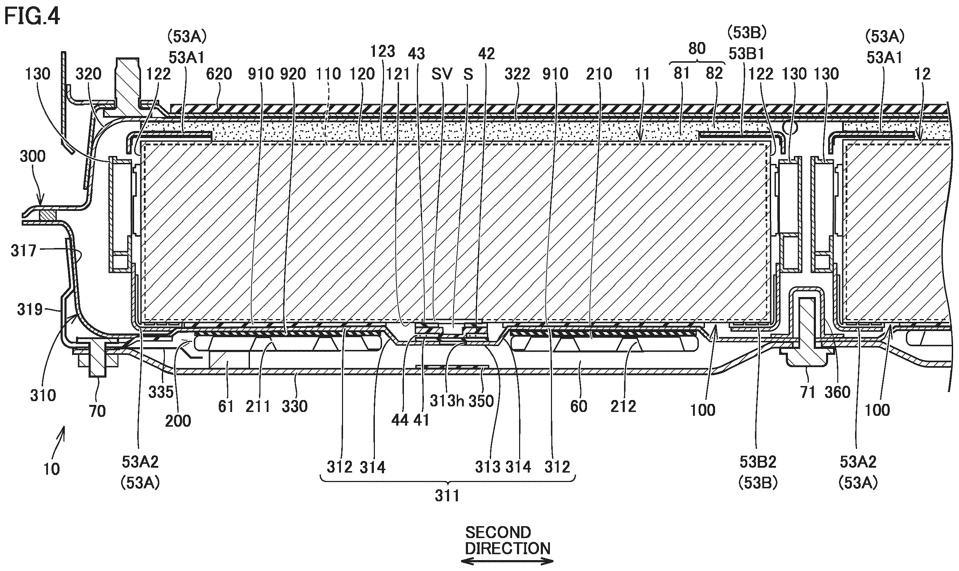

Fig. 1 is a diagram showing a vehicle including a power storage device according to the first embodiment. Fig. 2 is a perspective view showing the power storage device and a frame member according to the first embodiment. Fig. 3 is a cross-sectional view taken along a line III-III shown in Fig. 2. Fig. 4 is a cross-sectional view taken along a line IV-IV shown in Fig. 3.

As shown in Fig. 1, a vehicle 1 includes a vehicle body 2 and a power storage device 10. Examples of vehicle 1 include a hybrid electric vehicle, a plug-in hybrid electric vehicle, and a battery electric vehicle.

As shown in Figs. 1 and 2, vehicle body 2 includes a frame member 20. Frame member 20 is disposed on a bottom portion of vehicle body 2. Frame member 20 includes a pair of first frames 21, a pair of second frames 22, a first cross frame 23, and a second cross frame 24.

The pair of first frames 21 face each other in a first direction. Each first frame 21 is shaped to extend in a second direction orthogonal to both the first direction and an upward-downward direction. For example, the first direction may be parallel to a front-rear direction of vehicle 1, and the second direction may be parallel to a left-right direction (a width direction) of vehicle 1.

The pair of second frames 22 face each other in the second direction. Each second frame 22 is shaped to extend in the first direction. An end portion of each second frame 22 in the first direction is connected to first frame 21. The pair of second frames 22 are arranged in a substantially quadrangular cylindrical shape together with the pair of first frames 21 to surround power storage device 10.

First cross frame 23 is disposed between the pair of first frames 21 and couples the pair of second frames 22 to each other.

Second cross frame 24 is disposed between the pair of first frames 21 and couples the pair of second frames 22 to each other. Second cross frame 24 is spaced apart from first cross frame 23 in the first direction. Each of first cross frame 23 and second cross frame 24 forms, for example, a seat cross.

Power storage device 10 is attached to frame member 20. An upper surface of power storage device 10, i.e., an upper wall portion 322 of an upper member 320 (described later), may serve as a floor panel.

As shown in Fig. 2, power storage device 10 is disposed below first cross frame 23 and second cross frame 24.

As shown in Figs. 1 to 4, power storage device 10 includes four power storage stacks 11 to 14, a first outer restraint band 53A and a second outer restraint band 53B, an exhaust path 60, an adhesive 80, a cooler 200, an accommodation case 300, a bracket 319, a panel member 330, a reinforcement member 620, a device unit 800, a first thermally conductive adhesive 910, and a second thermally conductive adhesive 920. The number of power storage stacks is not limited to four.

Each of power storage stacks 11 to 14 includes a plurality of power storage cells 100. The plurality of power storage cells 100 are arranged in the first direction. Each of power storage stacks 11 to 14 is formed in a rectangular parallelepiped shape elongated in the first direction. As shown in Fig. 2, four power storage stacks 11 to 14 are arranged side by side in the second direction.

As shown in Fig. 3, a pair of end plates 51 that sandwich the plurality of power storage cells 100 from both sides in the first direction are provided on both sides of the plurality of power storage cells 100 in the first direction. A monitoring unit (smart battery management) 52 is disposed outside each end plate 51 in the first direction.

Device unit 800 is disposed, for example, at an end portion in the first direction. In the present embodiment, device unit 800 is disposed on a rear portion of upper member 320 in the front-rear direction of vehicle 1. Device unit 800 includes a junction box 812, an electricity supply unit 814, an electronic control unit 816, a first cooler 822, a second cooler 824, and a device cover 830.

Junction box 812 is disposed above upper member 320. Junction box 812 accommodates relays, fuses, and the like. Junction box 812 is cooled by first cooler 822 disposed between junction box 812 and upper member 320.

Electricity supply unit 814 is disposed above junction box 812. Electricity supply unit 814 is cooled by second cooler 824 disposed on electricity supply unit 814. Electronic control unit 816 is disposed above junction box 812.

Device cover 830 accommodates junction box 812, electricity supply unit 814, electronic control unit 816, and second cooler 824.

As shown in Figs. 3 and 4, reinforcement member 620 is disposed on upper member 320. More specifically, reinforcement member 620 is placed on upper wall portion 322. Reinforcement member 620 functions to disperse a load that locally acts on power storage device 10 from above by an occupant of vehicle 1.

As shown in Fig. 4, each power storage cell 100 includes an electrode assembly 110, a cell case 120, and a pair of external terminals 130.

Electrode assembly 110 may be formed of a wound body implemented by winding a positive electrode sheet and a negative electrode sheet with a separator being interposed therebetween, or may be formed of a stacked body implemented by stacking a positive electrode sheet and a negative electrode sheet with a separator being interposed therebetween. Electrode assembly 110 is formed in a shape elongated in the second direction.

Cell case 120 accommodates electrode assembly 110. Cell case 120 is formed in a rectangular parallelepiped shape. Cell case 120 is made, for example, of metal such as aluminum. Cell case 120 includes a lower surface 121, a pair of side surfaces 122, and an upper surface 123.

Upper surface 123 and lower surface 121 are arranged in the upward-downward direction. Lower surface 121 is provided with a safety valve SV. The pair of side surfaces 122 are arranged in the above-mentioned second direction (the width direction) orthogonal to the upward-downward direction and the first direction. Each of the pair of side surfaces 122 is provided with external terminal 130. An external terminal provided on one of the pair of side surfaces 122 is different in polarity from an external terminal provided on the other of the pair of side surfaces 122.

The plurality of power storage cells 100 are restrained in the first direction by first outer restraint band 53A and second outer restraint band 53B.

On one side in the second direction, first outer restraint band 53A restrains the power storage stack from both sides thereof in the first direction. First outer restraint band 53A has a first portion 53A1 and a second portion 53A2.

First portion 53A1 is located on the upper surface 123 side. First portion 53A1 includes a portion disposed to extend in the first direction so as to extend over one end side, in the second direction (the width direction), of upper surface 123 included in each of the plurality of power storage cells 100.

Second portion 53A2 is located on the lower surface 121 side. Second portion 53A2 includes a portion disposed to extend in the first direction so as to extend below one end side, in the second direction, of lower surface 121 included in each of the plurality of power storage cells 100.

On the other side in the second direction, second outer restraint band 53B restrains the power storage stack from both sides thereof in the first direction. Second outer restraint band 53B has a first portion 53B1 and a second portion 53B2.

First portion 53B1 is located on the upper surface 123 side. First portion 53B1 includes a portion disposed to extend in the first direction so as to extend over the other end side, in the second direction (the width direction), of upper surface 123 included in each of the plurality of power storage cells 100.

Second portion 53B2 is located on the lower surface 121 side. Second portion 53B2 includes a portion disposed to extend in the first direction so as to extend below the other end side, in the second direction, of lower surface 121 included in each of the plurality of power storage cells 100.

Accommodation case 300 accommodates four power storage stacks 11 to 14 therein. Accommodation case 300 includes a lower case 310, upper member 320, and a cross member 360.

Upper member 320 covers the plurality of power storage stacks 11 to 14 from above. Upper member 320 has an upper wall portion 322. Upper wall portion 322 may be provided with beads extending in the second direction. Upper member 320 has a peripheral edge portion connected to a peripheral edge portion of lower case 310 with bolts or the like with a seal member being interposed therebetween.

Lower case 310 has a substantially box shape that opens upward. Lower case 310 includes a bottom wall portion 311 and a peripheral wall portion 317. Peripheral wall portion 317 rises from a peripheral edge of bottom wall portion 311. Peripheral wall portion 317 is shaped to surround each of lower portions of power storage stacks 11 to 14. A bracket 319 for attaching panel member 330 described later is fixed to peripheral wall portion 317.

Bottom wall portion 311 supports each of the plurality of power storage stacks 11 to 14. Bottom wall portion 311 includes a pair of mount portions 312, a low wall portion 313, and a connection portion 314 in each of regions in which power storage stacks 11 to 14 are respectively disposed.

The pair of mount portions 312 constitute a support portion that supports the power storage stack. The pair of mount portions 312 are located apart from each other in the second direction. The power storage stack is mounted on the pair of mount portions 312. First thermally conductive adhesive 910 is disposed between the lower surface of the power storage stack (specifically, lower surface 121 of each of the plurality of power storage cells 100) and the pair of mount portions 312.

Low wall portion 313 is located between the pair of mount portions 312 in the second direction. Low wall portion 313 is located at a position lower than the pair of mount portions 312 in the upward-downward direction. Low wall portion 313 is provided with a through hole 313h. Connection portion 314 connects the pair of mount portions 312 to low wall portion 313.

A space S is provided between low wall portion 313 and the lower surface of the power storage stack. Space S is surrounded by the lower surface of the power storage stack, low wall portion 313, and connection portion 314. In the region in which each power storage stack is disposed, safety valve SV provided in each of the plurality of power storage cells 100 faces space S. Space S is located directly below each safety valve SV.

A waterproof sheet 41, a waterproof seal member 42, an adhesive 44, and a heat insulation member 43 are disposed in space S. Waterproof sheet 41 is disposed in the state in which it covers through hole 313h. Waterproof sheet 41 suppresses water from entering space S via through hole 313h. Waterproof sheet 41 may be provided so as to be permeable to gas, or may be configured such that it is broken by the gas discharged from safety valve SV so as to allow the gas to pass via through hole 313h.

Seal member 42 is disposed above waterproof sheet 41 and fixed to waterproof sheet 41 with adhesive 44. When viewed in the upward-downward direction, seal member 42 includes a portion surrounding through hole 313h and safety valve SV. Thereby, when water enters space S from through hole 313h, water can be suppressed from spreading out inside space S. When a waterproof adhesive is used as seal member 42, adhesive 44 may not be provided.

Further, in the case where seal member 42 has a cover portion that covers a part of waterproof sheet 41 that is located above through hole 313h, the cover portion is configured to be deformed, for example, broken, by the gas discharged from safety valve SV so as to allow the gas to pass via through hole 313h.

Heat insulation member 43 is sandwiched by seal member 42 and a portion of the lower surface of the power storage stack that is located around safety valve SV. Heat insulation member 43 does not cover safety valve SV, and this safety valve SV is exposed from heat insulation member 43. Heat insulation member 43 is made, for example, of mica obtained by hardening a natural inorganic mineral through heat pressing. Heat insulation member 43 may cover safety valve SV, in which case heat insulation member 43 is provided with a notch or the like such that it can be broken by the gas discharged from safety valve SV.

Cross member 360 is fixed to a portion of bottom wall portion 311 that is located between a pair of power storage stacks adjacent to each other in the second direction. Cross member 360 extends in the first direction. Cross member 360 may be connected to wall portions of peripheral wall portion 317 that are located on both sides thereof in the first direction. Cross member 360 may be connected to the pair of first frames 21 via brackets (not shown).

Adhesive 80 is disposed above each of power storage stacks 11 to 14. Specifically, adhesive 80 is disposed between upper member 320 and each of power storage stacks 11 to 14. Adhesive 80 has a first filling portion 81 that fills a space between upper wall portion 322 and upper surface 123 of each of the plurality of power storage cells 100 that is exposed from first outer restraint band 53A and second outer restraint band 53B. Further, adhesive 80 may have a second filling portion 82 that fills a space between upper wall portion 322 and each of first portion 53A1 of first outer restraint band 53A and first portion 53B1 of second outer restraint band 53B.

In the example described above, first filling portion 81 entirely covers upper surface 123 of each of the plurality of power storage cells 100 that is exposed from first outer restraint band 53A and second outer restraint band 53B, but the present disclosure is not limited thereto. First filling portion 81 should only cover a portion of upper surface 123 that corresponds to one third or more of the width of upper surface 123 in the second direction. First filling portion 81 preferably covers at least a central portion of upper surface 123. Further, first outer restraint band 53A and second outer restraint band 53B may not be provided.

Panel member 330 is disposed below lower case 310. Panel member 330 covers bottom wall portion 311 of lower case 310 from below. Further, panel member 330 covers cooler 200 from below and protects cooler 200. Specifically, panel member 330 is fixed to lower case 310 by fastening members 71, 72 or the like. Each of both end sides of panel member 330 in the second direction is fixed by fastening member 71 to bracket 319 fixed to peripheral wall portion 317. A portion of panel member 330 that is located between a pair of power storage stacks adjacent to each other in the second direction is fixed by a fastening member to a portion of bottom wall portion 311 that is located between the pair of power storage stacks adjacent to each other in the second direction.

Panel member 330 is shaped such that a portion of its outer surface located below each of power storage stacks 11 to 14 protrudes downward, and a portion of its inner surface located below each of power storage stacks 11 to 14 recesses downward.

Panel member 330 is formed to provide exhaust path 60 located below each of power storage stacks 11 to 14 and between panel member 330 and bottom wall portion 311. Exhaust paths 60 formed below power storage stacks 11 to 14 are independent of each other, but the present disclosure is not limited thereto, and exhaust paths 60 may be in communication with each other. Exhaust path 60 is provided to be able to communicate with space S that faces safety valve SV with through hole 313h being interposed therebetween. Exhaust path 60 serves as a path through which the gas discharged from safety valve SV is discharged to the outside of power storage device 10.

A protective plate 350 is disposed on the inner surface of panel member 330. Protective plate 350 is disposed below safety valve SV. Protective plate 350 receives a blast discharged from safety valve SV. Protective plate 350 is made, for example, of mica obtained by hardening a natural inorganic mineral through heat pressing.

Further, a collection portion 335 is provided inside each of exhaust paths 60 and serves to collect foreign substances such as debris contained in the gas discharged into exhaust path 60. A barrier member 61 is disposed between cooler 200 and panel member 330 on at least one side in the second direction inside each exhaust path 60. Barrier member 61 suppresses, for example, the gas discharged into exhaust path 60 from spreading out in the second direction. Barrier member 61 is made, for example, of silicone foam.

Cooler 200 is disposed below each of the plurality of power storage stacks 11 to 14. In the present embodiment, cooler 200 is disposed outside accommodation case 300. Specifically, cooler 200 is disposed below bottom wall portion 311 of lower case 310. Cooler 200 is disposed between bottom wall portion 311 and panel member 330. In other words, cooler 200 is disposed inside exhaust path 60.

Second thermally conductive adhesive 920 is disposed between cooler 200 and bottom wall portion 311 (more specifically, each of the pair of mount portions 312). Cooler 200 cools each of the plurality of power storage stacks 11 to 14. A cooling medium such as oil flows through cooler 200.

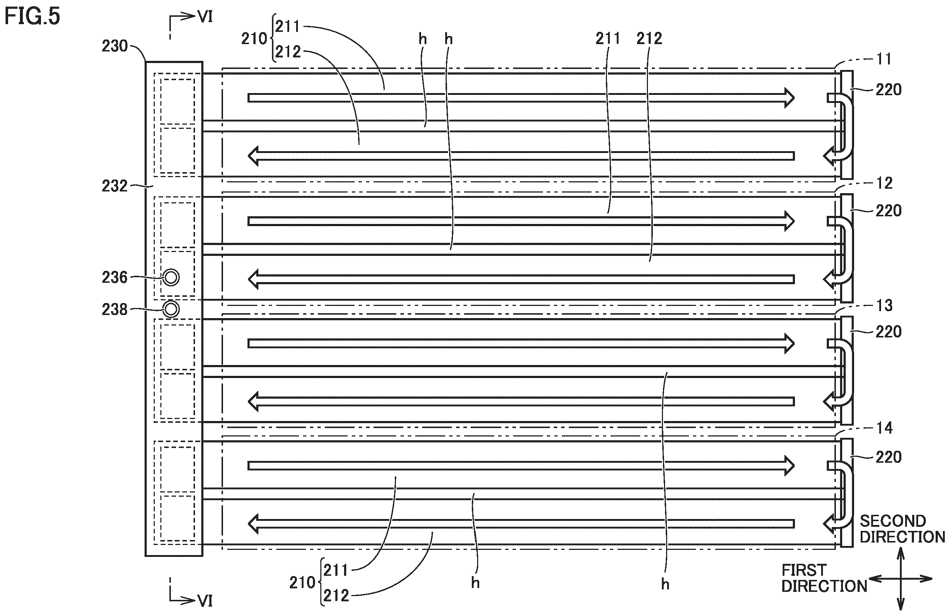

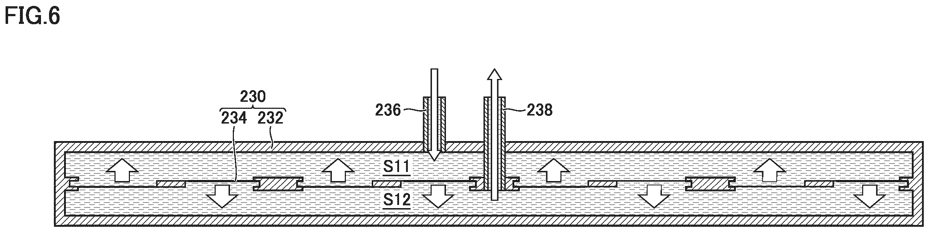

Fig. 5 is a plan view schematically showing the cooler. Fig. 6 is a cross-sectional view taken along a line VI-VI in Fig. 5. As shown in Figs. 5 and 6, cooler 200 includes four cooling portions 210, a folded portion 220, and a coupling portion 230.

Each cooling portion 210 has a shape elongated in the first direction. Each cooling portion 210 cools one power storage stack. Fig. 5 shows two-dot chain lines indicating power storage stacks 11 to 14. As shown in Fig. 4, each cooling portion 210 is in contact with lower surface 121 of each of power storage stacks 11 to 14 with second thermally conductive adhesive 920, the pair of mount portions 312, and first thermally conductive adhesive 910 being interposed therebetween. Second thermally conductive adhesive 920 and first thermally conductive adhesive 910 extend in the first direction. Each cooling portion 210 may be formed by extrusion molding of metal such as aluminum. As shown in Figs. 4 and 5, each cooling portion 210 includes an upstream flow path 211 and a downstream flow path 212.

Upstream flow path 211 is provided on the upstream side in the flow direction of the cooling medium. Downstream flow path 212 is provided on the downstream side in the flow direction of the cooling medium. As shown in Fig. 5, upstream flow path 211 and downstream flow path 212 each are shaped to extend in the first direction. Upstream flow path 211 and downstream flow path 212 are adjacent to each other in the second direction. The cooling medium flows through upstream flow path 211 from one side toward the other side in the first direction, and flows through downstream flow path 212 from the other side toward one side in the first direction.

Folded portion 220 couples a downstream end of upstream flow path 211 and an upstream end of downstream flow path 212. Thus, as indicated by arrows in Fig. 5, the cooling medium flows through upstream flow path 211, folded portion 220, and downstream flow path 212 in this order.

Coupling portion 230 couples four cooling portions 210 to each other. As shown in Fig. 6, coupling portion 230 includes a coupling portion main body 232 and a partition wall 234.

Coupling portion main body 232 couples four cooling portions 210 to each other. Thus, the cooling media having flowed through respective downstream flow paths 212 merge with each other inside coupling portion main body 232. Coupling portion main body 232 may be formed in a substantially rectangular parallelepiped shape.

Partition wall 234 partitions the inside of coupling portion main body 232 into two spaces. In the present embodiment, as shown in Fig. 6, partition wall 234 divides the inside of coupling portion main body 232 into two parts in the upward-downward direction. An upstream end of each upstream flow path 211 is connected to a space above partition wall 234 (the space will be hereinafter referred to as an "upstream space S11") inside coupling portion main body 232, and a downstream end of each downstream flow path 212 is connected to a space below partition wall 234 (the space will be hereinafter referred to as a "downstream space S12") inside coupling portion main body 232. Thus, the cooling medium having flowed into upstream space S11 flows into each upstream flow path 211. The cooling medium having flowed out of each downstream flow path 212 flows into downstream space S12.

As shown in Figs. 5 and 6, an inflow portion 236 and an outflow portion 238 are connected to coupling portion 230.

Inflow portion 236 allows for communication between upstream space S11 inside coupling portion main body 232 and the outside of coupling portion main body 232. Thus, the cooling medium flows into upstream space S11 inside coupling portion main body 232 from the outside of coupling portion main body 232 through inflow portion 236. In the present embodiment, inflow portion 236 is connected to an upper surface of coupling portion main body 232.

Outflow portion 238 allows for communication between downstream space S12 inside coupling portion main body 232 and the outside of coupling portion main body 232. Thus, the cooling medium flows out of coupling portion main body 232 from downstream space S12 of coupling portion main body 232 through outflow portion 238. In the present embodiment, outflow portion 238 is connected to an upper portion of coupling portion main body 232 and partition wall 234. The cooling medium flowing out of coupling portion main body 232 through outflow portion 238 is higher in temperature than the cooling medium flowing into coupling portion main body 232 through inflow portion 236.

As shown in Figs. 3 and 4 again, when gas is discharged downward through safety valve SV due to heat generation or the like in one of power storage cells 100, the gas passes via a through hole 310h and is introduced into exhaust path 60 disposed below the pair of mount portions 312 that support the power storage stack. The gas introduced into exhaust path 60 is discharged to the outside from the end portion side of exhaust path 60 in the first direction.

As described above, by providing safety valve SV in lower surface 121 of power storage cell 100 and providing exhaust path 60 below the support portion that supports the power storage stack, the gas discharged from power storage cell 100 can be suppressed from moving through an area above the power storage stack. Thereby, transfer of heat to the area above power storage cell 100 by the gas discharged from power storage cell 100 can be suppressed. As a result, transfer of heat into the vehicle interior located above power storage device 10 can be suppressed. In particular, when upper wall portion 322 of power storage device 10 serves as a floor panel, the above-described effects can be suitably achieved.

Further, in the present embodiment, cooler 200 is disposed inside exhaust path 60, so that the gas discharged from power storage cell 100 can be cooled. Thereby, the heat from the gas can also be suppressed from being transferred into the vehicle interior located above power storage device 10.

Further, when the gas is discharged from power storage cell 100, power storage cell 100 rises in temperature to cause expansion. However, as described above, adhesive 80 disposed above the power storage stack can suppress upward expansion of upper surface 123 of each of the plurality of power storage cells 100. Thus, deformation of upper wall portion 322 by a load resulting from expansion can be suppressed. In particular, when upper wall portion 322 of power storage device 10 serves as a floor panel, deformation of the vehicle interior by expansion can be directly suppressed. Further, adhesive 80 can also suppress vibration of upper member 320.

### (Second Embodiment)

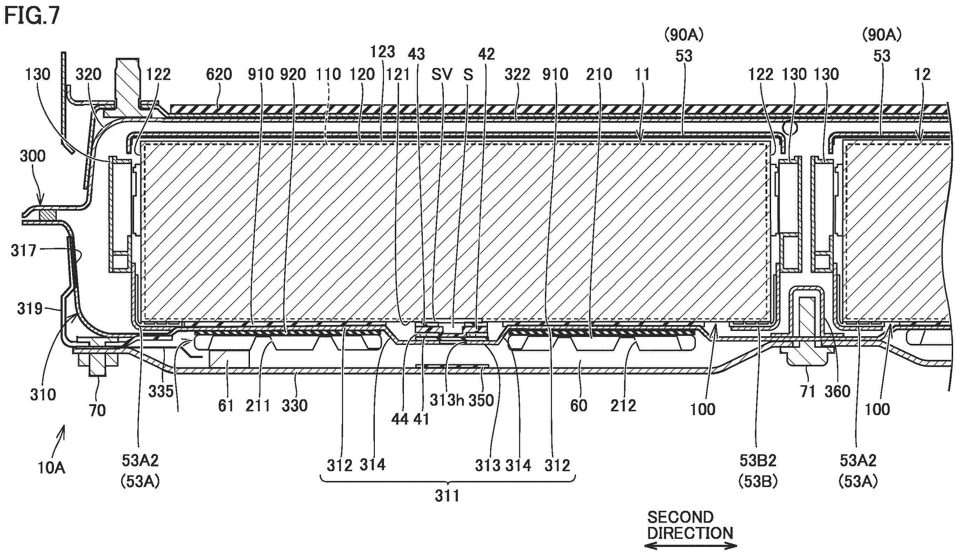

Fig. 7 is a cross-sectional view showing a power storage device according to the second embodiment. Fig. 7 shows a cross-sectional view seen at a position corresponding to that in Fig. 3.

As shown in Fig. 7, a power storage device 10A according to the second embodiment is different from power storage device 10 according to the first embodiment in that a plate-shaped member 90A is used in place of adhesive 80.
Other configurations are substantially the same.

Each of the plurality of plate-shaped members 90A is disposed above a corresponding one of power storage stacks 11 to 14, and faces upper surface 123 of each of the plurality of power storage cells 100 included in each of the power storage stacks. Plate-shaped member 90A is formed of a restraint band 53 that restrains the power storage stack from both sides of the power storage stack in the first direction, restraint band 53 being disposed to extend in the first direction along at least the central portion, in the second direction, of upper surface 123 included in each of the plurality of power storage cells 100. Restraint band 53 covers upper surface 123 entirely in the second direction, upper surface 123 being included in each of the plurality of power storage cells 100 included in each of power storage stacks 11 to 14.

Even in the configuration as described above, restraint band 53 can suppress upward expansion of upper surface 123 of each of the plurality of power storage cells 100. Thus, in power storage device 10A according to the second embodiment, substantially the same effects as those achieved by power storage device 10 according to the first embodiment can be achieved.

As compared with the first embodiment, in the second embodiment, adhesive 80 can be eliminated, and first portion 53A1 of first outer restraint band 53A and first portion 53B1 of second outer restraint band 53B can be integrated as a single restraint band 53, so that the number of components can be reduced and the manufacturing cost can be reduced.

### (Third Embodiment)

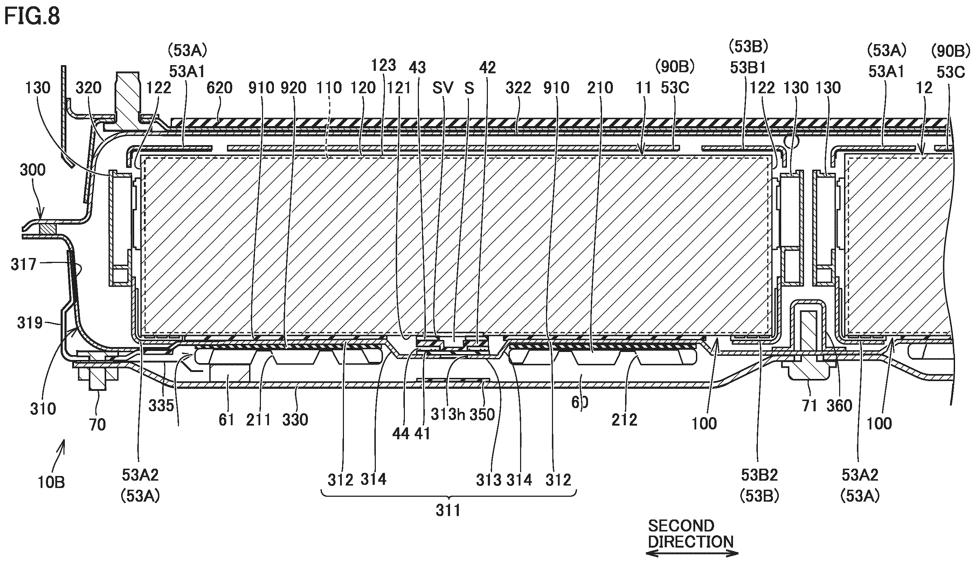

Fig. 8 is a cross-sectional view showing a power storage device according to the third embodiment. Fig. 8 shows a cross-sectional view seen at a position corresponding to that in Fig. 3.

As shown in Fig. 8, a power storage device 10B according to the third embodiment is different from power storage device 10 according to the first embodiment in that a plate-shaped member 90B is used in place of adhesive 80.
Other configurations are substantially the same.

Each of the plurality of plate-shaped members 90B is disposed above a corresponding one of power storage stacks 11 to 14, and faces upper surface 123 of each of the plurality of power storage cells 100 included in each of the power storage stacks. Plate-shaped member 90B is formed of a restraint band 53C. Restraint band 53C is disposed to extend in the first direction along the central portion, in the second direction, of upper surface 123 included in each of the plurality of power storage cells 100, and restrains the power storage stack from both sides of the power storage stack in the first direction.

Restraint band 53C is located between first portion 53A1 of first outer restraint band 53A and first portion 53B1 of second outer restraint band 53B in the second direction. Restraint band 53C is spaced apart from first portions 53A1 and 53B1 in the second direction. Restraint band 53C should only cover a portion of upper surface 123 that corresponds to one third or more of the width of upper surface 123 in the second direction. Restraint band 53C preferably covers at least the central portion of upper surface 123.

Even in the configuration as described above, restraint band 53C can suppress upward expansion of upper surface 123 included in each of the plurality of power storage cells 100. Thus, in power storage device 10B according to the third embodiment, substantially the same effects as those achieved by power storage device 10 according to the first embodiment can be achieved.

### (Fourth Embodiment)

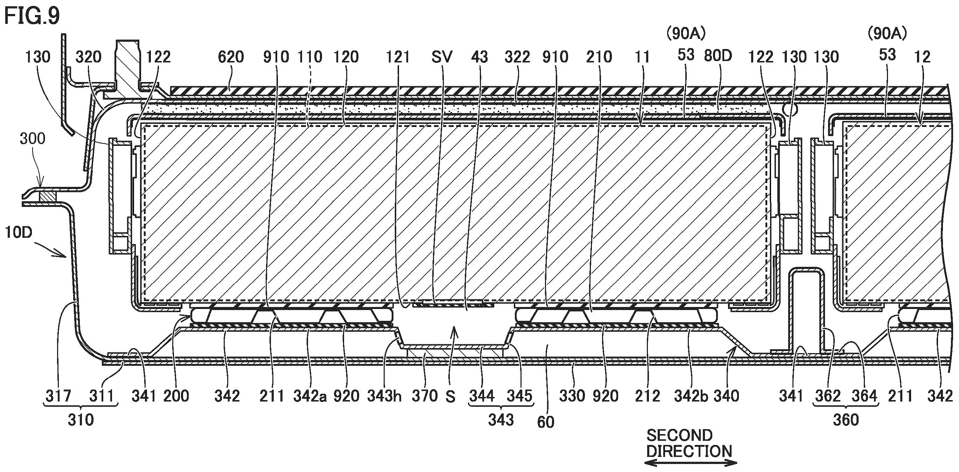

Fig. 9 is a cross-sectional view showing a power storage device according to the fourth embodiment. Fig. 9 shows a cross-sectional view seen at a position corresponding to that in Fig. 3.

As shown in Fig. 9, a power storage device 10D according to the fourth embodiment is different from power storage device 10 according to the first embodiment mainly in the shape of lower case 310, the arrangement of cooler 200, and the shape of panel member 330 and also in that a path forming member 340 is included and both plate-shaped member 90A and an adhesive 80D are used. Other configurations are substantially the same.

In power storage device 10D according to the fourth embodiment, bottom wall portion 311 of lower case 310 has a substantially flat plate shape. Bottom wall portion 311 is spaced apart downward from the plurality of power storage stacks 11 to 14. Cooler 200 is accommodated inside lower case 310.

Each of the plurality of power storage stacks 11 to 14 is not directly supported by bottom wall portion 311 of lower case 310 but supported by path forming member 340 and cooler 200. More specifically, each of the plurality of power storage stacks 11 to 14 is supported by a support wall 342 (described later) and cooler 200. Support wall 342 and cooler 200 function as a support portion for supporting each of the plurality of power storage stacks 11 to 14.

Path forming member 340 is disposed between bottom wall portion 311 and each of the plurality of power storage stacks 11 to 14. Path forming member 340 forms exhaust path 60 together with bottom wall portion 311. Exhaust path 60 is formed below each of power storage stacks 11 to 14. In the example described in the present embodiment, path forming member 340 is formed separately from lower case 310, but path forming member 340 may be formed integrally with lower case 310.

Path forming member 340 is provided with a through hole 343h. Through hole 343h is provided below safety valve SV. Through hole 343h is located between path forming member 340 and the lower surface of the power storage stack, and allows for communication between exhaust path 60 and space S located below the safety valve.

Path forming member 340 includes a base portion 341, support wall 342, and a coupling portion 343.

Base portion 341 is connected to bottom wall portion 311 of lower case 310 by welding or the like. Base portion 341 is formed to be flat.

Support wall 342 protrudes from base portion 341. Support wall 342 supports cooler 200. In other words, cooler 200 is disposed between lower surface 121 of cell case 120 and path forming member 340. Cooler 200 is disposed directly below lower surface 121 with first thermally conductive adhesive 910 being interposed therebetween. Support wall 342 has a first wall portion 342a and a second wall portion 342b.

First wall portion 342a supports upstream flow path 211. More specifically, first wall portion 342a supports upstream flow path 211 with second thermally conductive adhesive 920 being interposed therebetween. First wall portion 342a is formed in a flat plate shape.

Second wall portion 342b supports downstream flow path 212. More specifically, second wall portion 342b supports downstream flow path 212 with second thermally conductive adhesive 920 being interposed therebetween. Second wall portion 342b is formed in a flat plate shape.

Coupling portion 343 couples first wall portion 342a and second wall portion 342b. Coupling portion 343 may be formed as a recess (hereinafter referred to as a "recess 343") recessed downward from support wall 342. Recess 343 provides a single space extending in the first direction (the arrangement direction in which the plurality of power storage cells 100 are arranged) between recess 343 and the plurality of power storage cells 100. Note that coupling portion 343 may be formed as a protrusion protruding upward from support wall 342. Recess 343 includes a receiving portion 344 and a coupling portion 345.

Receiving portion 344 is disposed to face safety valve SV and receives a blast discharged from safety valve SV. Receiving portion 344 is disposed between safety valve SV and bottom wall portion 311 of lower case 310. Receiving portion 344 is shaped to extend in the first direction. Receiving portion 344 is formed in a flat plate shape.

Receiving portion 344 is spaced apart upward from bottom wall portion 311. An elastic member 370 may be disposed between receiving portion 344 and bottom wall portion 311. Elastic member 370 has a shock absorbing function to suppress support wall 342 and recess 343 from relatively displacing (vibrating) with respect to bottom wall portion 311 due to vibration or the like.

Coupling portion 345 couples an edge portion of receiving portion 344 and support wall 342 in the second direction (in the orthogonal direction orthogonal to both the arrangement direction and the upward-downward direction). Each through hole 343h is provided in coupling portion 345.

Panel member 330 is provided below lower case 310. Panel member 330 is attached to a lower surface of bottom wall portion 311. Panel member 330 functions to protect lower case 310. Panel member 330 may be formed in a flat plate shape.

Heat insulation member 43 is attached to lower surface 121 of cell case 120 in the state in which heat insulation member 43 covers safety valve SV. Heat insulation member 43 is provided to be breakable by the gas discharged from safety valve SV.

Plate-shaped member 90A is formed of restraint band 53 described above. Adhesive 80D fills a space between restraint band 53 and upper wall portion 322.

In power storage device 10D according to the fourth embodiment, when gas is discharged downward from safety valve SV due to a short circuit or the like in any one of power storage cells 100, the gas breaks a heat insulation member 43 and flows through space S and through hole 343h located between safety valve SV and receiving portion 344, and then, the gas is introduced into exhaust path 60. The gas introduced into exhaust path 60 is discharged to the outside from the end portion side of exhaust path 60 in the first direction.

As described above, by providing safety valve SV in lower surface 121 of power storage cell 100 and providing exhaust path 60 below the support portion that supports the power storage stack, the gas discharged from power storage cell 100 can be suppressed from moving through an area above the power storage stack. Thereby, transfer of heat to the area above power storage cell 100 by the gas discharged from power storage cell 100 can be suppressed. As a result, transfer of heat into the vehicle interior located above power storage device 10 can be suppressed. In particular, when upper wall portion 322 of power storage device 10 serves as a floor panel, the above-described effects can be suitably achieved.

Further, since cooler 200 cools lower surface 121 provided with safety valve SV in power storage cell 100, damage caused to lower surface 121 by the gas flowing out from safety valve SV can be suppressed.

Further, since plate-shaped member 90A and adhesive 80D are provided as described above, upward expansion of upper surface 123 included in each of the plurality of power storage cells 100 can be suppressed. Thus, deformation of upper wall portion 322 by a load resulting from expansion can be suppressed. In particular, when upper wall portion 322 of power storage device 10 serves as a floor panel, deformation of the vehicle interior by expansion can be directly suppressed.

In addition, since adhesive 80D is disposed between plate-shaped member 90A and upper member 320, vibration of upper member 320 can be suppressed.

### (Other Modifications)

In the examples described above, the pair of external terminals 130 are provided on the pair of respective side surfaces 122 of cell case 120, but the present disclosure is not limited thereto. The pair of external terminals 130 may be provided on upper surface 123 or lower surface 121 of cell case 120. In the case where the pair of external terminals 130 are provided on the pair of respective side surfaces 122, the pair of external terminals 130 can be prevented from protruding from cell case 120 in the upward-downward direction, so that the power storage device can be reduced in height. Further, in the case where the pair of external terminals 130 are provided on the pair of respective side surfaces 122 or on upper surface 123, the pair of external terminals 130 are disposed away from exhaust path 60, so that any influence exerted upon the pair of external terminals 130 by the gas discharged from the safety valve can be suppressed.

Further, it is originally intended to appropriately combine features in the above-described embodiments. For example, in power storage device 10D according to the fourth embodiment, adhesive 80 according to the first embodiment, plate-shaped member 90A according to the second embodiment, and plate-shaped member 90B according to the third embodiment may be applicable as appropriate in place of plate-shaped member 90A and adhesive 80D.

In the examples described above, the plate-shaped member is formed of the restraint band, but the present disclosure is not limited thereto. The plate-shaped member may not function to restrain the plurality of power storage stacks in the first direction, and may be a flat plate fixed inside accommodation case 300.

Although the embodiments of the present disclosure have been described, it should be understood that the embodiments disclosed herein are illustrative and non-restrictive in every respect. The scope of the present disclosure is defined by the terms of the claims, and is intended to include any modifications within the scope and meaning equivalent to the terms of the claims.

## Claims

1. A power storage device comprising:
a power storage stack (11) including a plurality of power storage cells each having a lower surface (121) and an upper surface (123), a safety valve (SV) being disposed in the lower surface (121);
a support portion that supports the power storage stack (11) from below;
an exhaust path (60) provided below the support portion and provided to be able to communicate with a space located below the safety valve (SV);
a cooler (200) that cools the power storage stack (11), the cooler (200) being disposed below the power storage stack (11); and
a plate-shaped member (90A, 90B) disposed above the power storage stack (11) and facing the upper surface (123) included in each of the plurality of power storage cells (100).

2. The power storage device according to claim 1, wherein
the plurality of power storage cells (100) are arranged in a first direction orthogonal to an upward-downward direction in which the upper surface (123) and the lower surface (121) are arranged, and
in each of the plurality of power storage cells (100),
a direction orthogonal to the upward-downward direction and the first direction is defined as a width direction, and
the plate-shaped member (90A, 90B) is formed of a restraint band (53, 53C) that restrains the power storage stack (11) from both sides of the power storage stack (11) in the first direction, the restraint band (53, 53C) being disposed to extend in the first direction along at least a central portion, in the width direction, of the upper surface (123) included in each of the plurality of power storage cells (100).

3. The power storage device according to claim 2, further comprising a first outer restraint band (53A) and a second outer restraint band (53B) that restrain the power storage stack (11) from both sides of the power storage stack (11) in the first direction, the first outer restraint band (53A) and the second outer restraint band (53B) each including a portion disposed to extend in the first direction along a corresponding one of both end sides, in the width direction, of the upper surface (123) included in each of the plurality of power storage cells (100), wherein
the restraint band (53C) is disposed between the first outer restraint band (53A) and the second outer restraint band (53B) in the width direction.

4. The power storage device according to claim 2, wherein the restraint band (53) covers the upper surface (123) entirely in the width direction, the upper surface (123) being included in each of the plurality of power storage cells (100).

5. A power storage device comprising:
a power storage stack (11) including a plurality of power storage cells (100) each having a lower surface (121) and an upper surface (123), a safety valve (SV) being disposed in the lower surface (121);
a support portion that supports the power storage stack (11) from below;
an exhaust path (60) provided below the support portion and provided to be able to communicate with a space located below the safety valve (SV);
a cooler (200) that cools the power storage stack (11), the cooler (200) being disposed below the power storage stack (11);
an upper member (320) that covers the power storage stack (11) from above; and
an adhesive (80) disposed between the upper member (320) and the upper surface of each of the plurality of power storage cells (100).

6. The power storage device according to any one of claims 1 to 5, further comprising a lower case (310) having a bottom wall portion (311) located below the power storage stack (11), wherein
the support portion is formed of a part of the bottom wall portion (311), and
the cooler (200) is disposed below the bottom wall portion (311).

7. The power storage device according to any one of claims 1 to 5, comprising:
a lower case (310) having a bottom wall portion (311) located below the power storage stack (11); and
a path forming member (340) disposed between the bottom wall portion (311) and the power storage stack (11) to form the exhaust path (60) together with the bottom wall portion (311), wherein
the cooler (200) is disposed between the power storage stack (11) and the path forming member (340), and
the support portion includes the path forming member (340) and the cooler (200).
